# EUROPEAN PATENT SPECIFICATION

(11) **EP 0 544 667 B1**
(45) Date of publication and mention of the grant of the patent: **26.09.2001**
(21) Application number: 91904709.2
(22) Date of filing: 06.02.1991
(51) Int. Cl.: H04M 11/00, H04M 1/26, H04M 1/274

(54) **DIALING EDITING METHOD AND APPARATUS**
METHODE UND ANORDNUNG ZUR ÄNDERUNG VON TELEFONNUMMERN
PROCEDE ET APPAREIL DE CORRECTION DE NUMEROTATION

(30) Priority: 20.08.1990 US 569498
(43) Date of publication of application: 09.06.1993
(73) Proprietor: MOTOROLA, INC., Schaumburg, IL 60196 (US)
(72) Inventor: BREEDEN, Robert, L., Boca Raton, FL 33433-3812 (US)
(74) Representative: Dunlop, Hugh Christopher
(86) International application number: US9100792
(87) International publication number: WO9203882

(56) References cited:
- DE-A- 2 742 993
- US-A- 4 682 357
- US-A- 4 707 854
- US-A- 4 800 582
- US-A- 4 850 009
- US-A- 4 868 862
- US-A- 4 870 686
- US-A- 4 980 910

## Description

### Field of the Invention

This invention relates in general to telephone communication systems, and more particularly to the appending and editing of a stored access number to a manually entered prefix number for accessing a public switched telephone network (PSTN).

### Background of the Invention

In contemporary telephone systems, the telephone user addresses other radio telephone units or land-line telephones by entering a telephone number that corresponds to the phone system address of the user to be contacted. Once the connection is complete, two way voice or data communications can take place.

There is now widespread use of of cellular telephone systems in automobiles and other transportation means as a mode of communication. In order to make the task of dialing an access number easier, manufacturers added a memory feature to their telephones. This memory feature enables a user to recall pre-programmed numbers for automatic dialing. The present memory dialing method works fine when the user is in the geographic region covered by his or her primary service carrier. However, when the user is "roaming," that is, the user leaves the area in which the user's primary carrier is operating, the user is sometimes required to prefix the stored numbers with an additional access code. With typical PSTN (public switched telephone network) access numbers being seven digits in length and area codes being three digits, cellular telephone users generally program their unit's memory with a seven or ten digit number. When additional digits, such as a system access code are needed, the user must either enter the entire number manually or by storing multiple numbers, thus wasting valuable memory slots.

Some cordless telephones, particularly those conforming to the Pan-European CT-2 specification, are capable of receiving a selective call numeric message representing a phone number where the message originator can be reached. This can be used to create a "pseudo" inbound calling capability by utilizing the received number presented in the message to originate a return call when the user reaches a Telepoint. Upon receiving the page, the user would see the call-back number, travel into range of a call-point, then activate a transmitter to originate a call to the number specified by the displayed message. However, this simple scenario does not address the requirements of modifying the received number to include toll, area, or other access codes. Regrettably, the only method available in a contemporary cordless telephone technology to modify a number is to delete the current last digit (at the cursor pointer) or complete telephone number.

Published prior art document DE-A-2742993 explains details of a known telephone with a memory for telephone numbers. Numbers can be read from the memory, and further digits can be appended to these numbers using the selection mechanism of the telephone. In this manner, area codes and/or telephone numbers can be held in the memory, can be re-called, and can extended by adding the number for an individual subscriber.

### Summary Of The Invention

The invention comprises a method of transmitting information in accordance with appended claim 1.

The invention also comprises a radio telephone having the features described in appended claim 2.

### Brief Description of the Drawings

FIG. 1 is a block diagram of the radio telephone.
FIG. 2 is an front isometric view of the radio telephone.
FIG. 3 is a flow diagram of the method for entering a prefix code and recalling a stored telephone number.
FIG. 4 is a flow diagram of a method for editing a displayed telephone number using the digit keys in accordance with the present invention.
FIG. 5 is a flow diagram of a method for editing a displayed telephone number using the CLR key in accordance with the present invention.
FIG. 6 illustrates conventional clear and digit key editing of a manually entered telephone number.
FIG. 7 illustrates clear and digit key editing of a received or recalled telephone number performed in accordance with the present invention.

### Description of a Preferred Embodiment

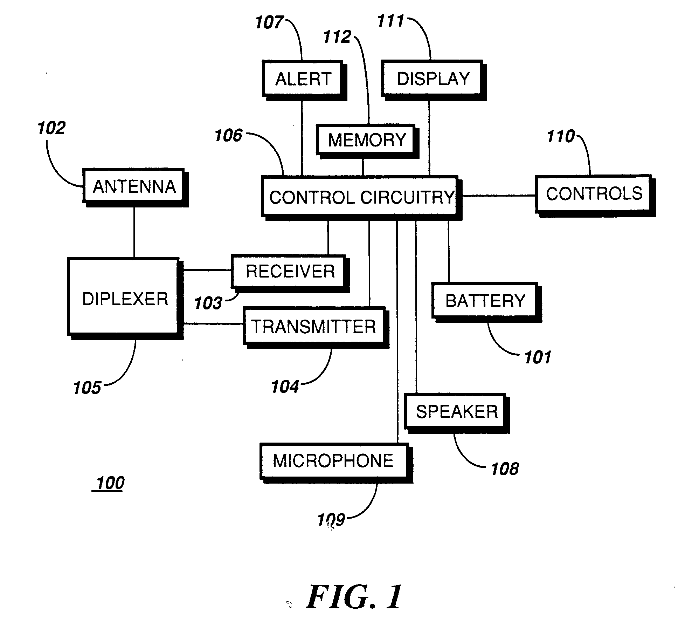

Referring to FIG. 1, a block diagram is shown of the battery (energy source) 101 powered radio telephone 100. A radio frequency signal is received or transmitted by the antenna 102. The antenna is coupled to the receiver 103 and transmitter 104 by a diplexer 105. The received signal is routed from the receiver 103 to the control circuitry 106 that recovers any information represented by the received signal. The recovered information is then used to activate functions within the radio telephone 100 such as the alert 107 (a ringer in the case of a radio telephone), and after answering the call, sustain the connection. When a connection is established, the user aurally communicates with the other party via the speaker 108 and a microphone 109. Recovered audio from the control circuitry 106 is routed to the speaker 108 which converts electrical energy into acoustical energy thus enabling the user to hear any communications. The microphone 109 is used to convert acoustic energy into electrical energy for use by the control circuitry 106 in modulating the radio frequency carrier produced by the transmitter 104, The user may initiate a call by selecting on a keypad 205 the proper controls 110 representing the number of a party to be contacted. In this embodiment, the user may enter first information representing an access code (or prefix) such as those needed by long distance PSTN carriers to access their system, then recall a local number containing second information from one of a plurality of memory locations available within the control circuitry 106. The recall of the second information from the memory 112 associated with the control circuitry 106 is accomplished by entering third information that is processed by the control circuitry 106. The control circuitry 106 then reads a stored number from the memory 112 and forms a complete number.

The formation of the complete number is accomplished by appending the alternate access code to the number recalled from the memory 112. Before dialing, the complete number is presented on a display 111 which provides visual feedback for the user. If desired, the user may either place the call, edit the number, or abort the dialing operation. When a call is initiated, the transmitting means 106, 104, 105, 102, broadcasts a modulated radio frequency carrier having information representative of the PSTN access codes, both alternate (limited or controlled access) and standard (local). The radio telephone base or an alternate unit then establishes a communication link once the proper identification is confirmed.

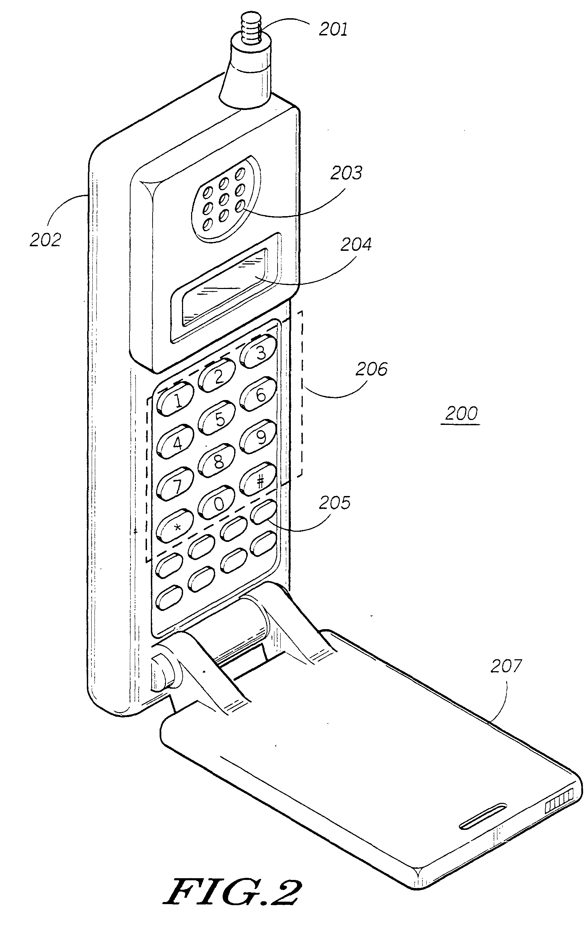

Referring to FIG. 2, the front isometric view of the radio telephone 200 shows the antenna 201, radio telephone housing 202, loudspeaker 203, display 204, control pad including a dialing keypad 206 and associated operational controls 205 such as a clear key, function key, recall key, and function key, and a microphone 207. Electrical contacts (not shown) located on the back of the radio telephone 200 are provided for charging the removable power source in the radio telephone. For example, charging is accomplished by folding the lower articulated portion upward against the control pad 205 then inserting the folded unit into a charging apparatus (not shown). Alternatively, a portable power adapter can be coupled into a power jack located on the radio telephone 200 for charging the power source or supplying external power.

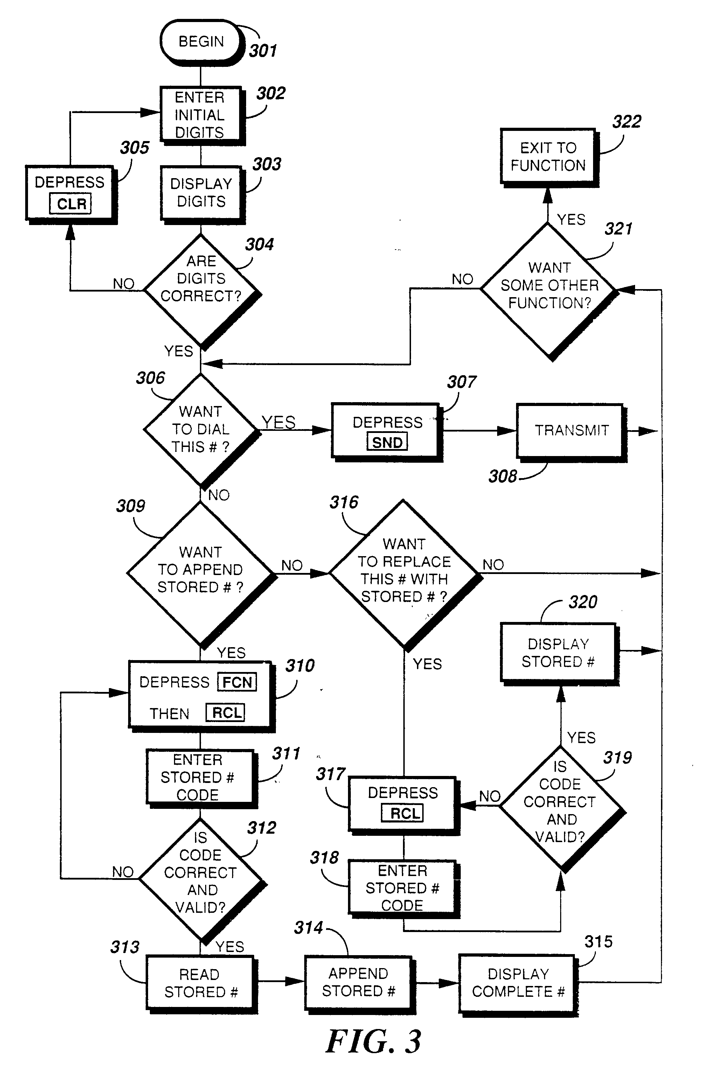

Referring to FIG. 3, when the user invokes the call mode 301 on the radio telephone 200, the controller circuitry 106 scans the controls 110. The user may abort the call mode at any time by entering an "escape" keystroke or waiting for the entry mode to "time out." When the user enters initial digits 302, the controller processes this first information for acceptance as valid digits and displays 303 the digits. When a valid access code or number has been entered, it is presented 303, thus providing feedback and allowing the user to accept or reject the code entered 304. If the digits entered are incorrect the user may press the CLR (clear) function key 305 clearing the present entry and returning to step 302 to enter new digits. If the digits displayed in step 303 are correct, the user may choose to dial the number 306 by depressing the SND (send) function key which initiates transmission 308 of the call information. The user may optionally append a stored number 309 to the number displayed in step 303 or replace the displayed number with another stored number 316 by activating the RCL (recall) function key 317, entering the stored number's code or memory number 318, determining if the code is correct and valid 319, and displaying the newly recalled stored number 320. If the user wants to append a stored number to the number displayed in step 303, the user would, for example, activate the FCN (function) then the RCL (recall) keys in sequence 310, enter a stored number code 311. If the memory recall entry number is tested for validity in step 312 and if valid the stored number code 311 representing second information is read from memory 313 and sequentially assembled into a complete phone number by appending the second information to the first information. The complete number to be dialed is then presented 315 on a display to the user for verification 306. The user can then accept or reject the transmission 308 of the complete number. If the user rejects transmission or after dialing has been completed, the call initiation sequence returns control to normal standby radio telephone functions 322.

When the user is ready to transmit the number (initiate a call), step 321 tests for the activation of any other radio function. If no other function has been selected and the user wants to dial the number displayed 306, the SND (send) function is selected 307 and transmission 308 of the call information takes place. After transmission control returns to step 321 awaiting another function 322 or subsequent transmissions.

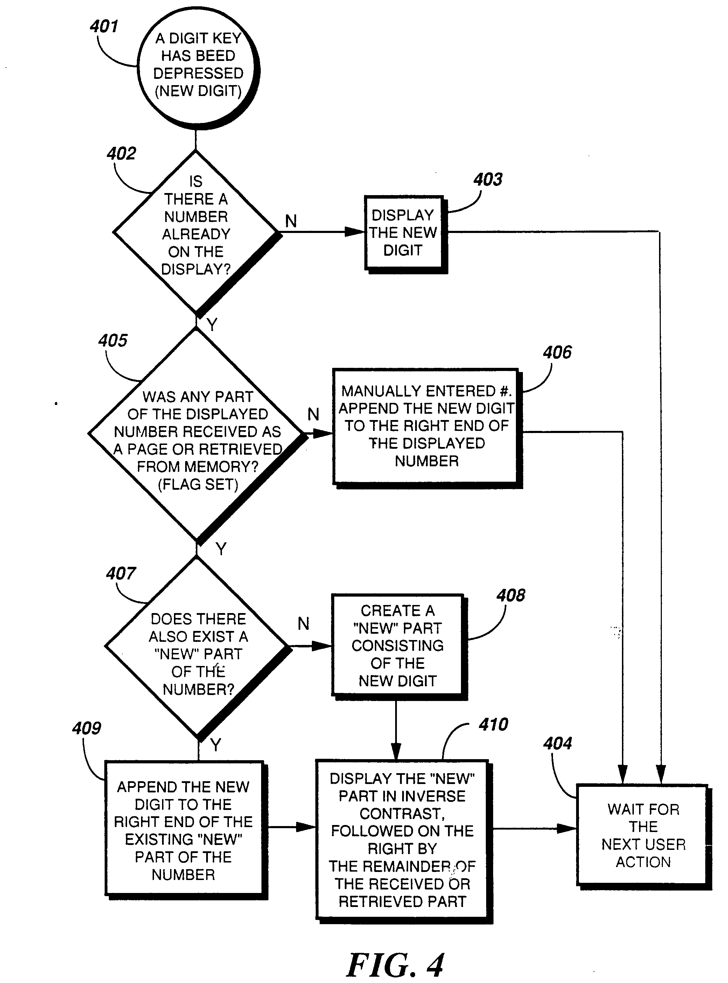

Referring to FIG. 4, the flow diagram illustrates the operation of an intelligent editing function using the digit keys that allows the user to either append and correct digits to a manually entered number or prefix and delete digits from a received or recalled (automatically entered) number. The decision as to the placement of the editing cursor and its function (append or delete) is determined by the origin of the displayed number. Upon sensing the entry of a digit (step 401), control is passed to decision 402. If the number is manually entered (i.e. the display has been previously cleared), decision 402 fails, a new digit is displayed (403), and control is passed to step 404, which waits for the next user action. If no number is displayed in decision 402, decision 405 tests for the origination mode of any part of the displayed number. In the case where the number has been completely entered in a manual mode, decision 405 fails and passes control to step 406, which appends the new digit to the right end of the displayed number. After the display operation in step 406 is complete, control is passed to step 404 that waits for the next user action. If the number tested in decision 405 contained any digits that were either recalled from memory or received in a selective call message, control is passed to decision 407 which checks for a "new" part of the number. If there is no new part of the number, decision 407 fails and step 408 creates a new part consisting of the new digit entered in step 401. If there is a new part in decision 407, step 409 appends a new digit to the rightmost end of the existing "new" part of the displayed number. In both cases of adding a new digit, step 410 displays the new digit in inverse contrast followed by the remainder of the received or retrieved portion of the number. Step 410 passes control to step 404 to wait for the next user action.

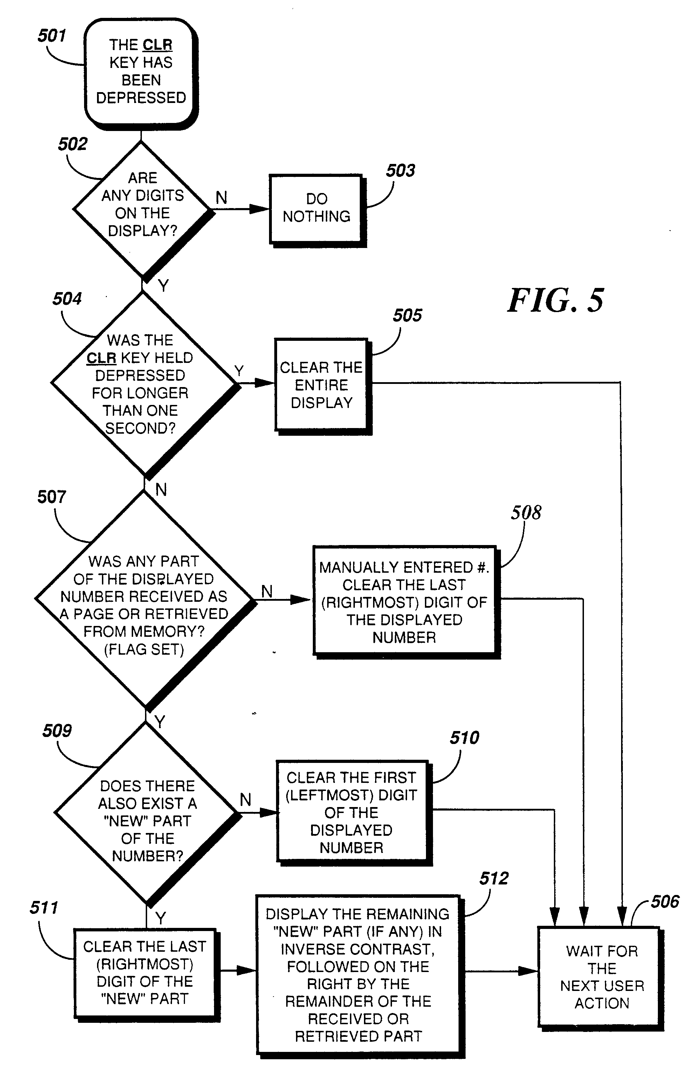

Referring to FIG. 5, the flow diagram illustrates the operation of an intelligent editing function using the clear key that allows the user to either append and correct digits to a manually entered number or prefix and delete digits from a received or recalled (automatically entered) number. Upon sensing the activation of the CLR key (step 501), control is passed to decision 502. If there are no digits on the display, the activation is ignored (step 503). If digits are present on the display, decision 502 is true and control is passed to step 504, which tests for the activation of the CLR key for more than one second. If the CLR key is activated for more than one second, decision 504 is true, the display is cleared (step 505), and control is passed to step 506 that waits for the next user action. If decision 504 fails, decision 507 tests for any part of the displayed number having been recalled from memory or received as a message. If decision 507 fails, the most recent manually entered digit (rightmost) of the displayed number is cleared and control is passed to step 506 to wait for the next user action. When decision 507 is true, decision step 509 test for a "new" part of the number is discussed in reference to FIG. 4. If there is no "new" part (decision 509 fails), step 510 clears the first (leftmost) digit of the displayed number and control is passed to step 506 to wait for the next user action. When decision 509 is true, step 511 clears the last (rightmost) digit of the "new" part, step 512 displays the remaining "new" part in inverse contrast followed on the right by the remainder of the received or recalled portion of the telephone number, and step 506 waits for the next user action.

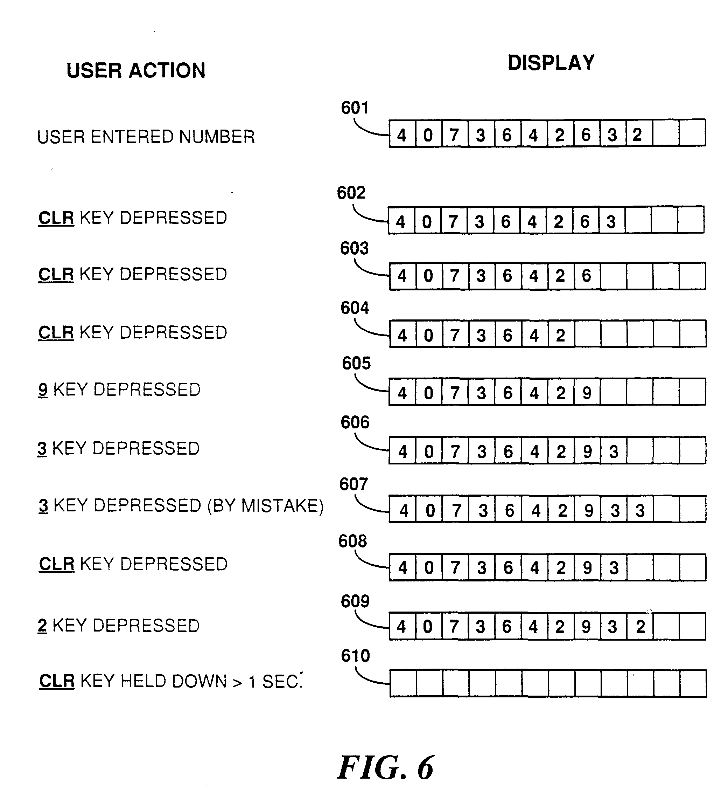

Referring to FIG. 6, the sequence (601-610) a conventional clear and digit key editing of a manually entered telephone number. In this example, the user desires to change a manually entered telephone number of "4073642632" to "4073642932." The display (601) preferably comprises a twelve digit presentation device showing the manually entered telephone number "4073642632." When the user activates a CLR key (602, 603, 604), the last digit at each respective activation "2", "3", and "6" is erased. The user then may activate the "9", "3", and "3" keys (605, 606, 607) causing the display to append the digits "933" to the number "4073642" resulting in the number "4073642933" (607). In this example, the "3" key was accidentally activated one to many times resulting in the number "4073642933" (607). To correct the last digit, the user again activates the CLR key (608) clearing the last "3," then the "2" key appending a new "2" to result in the number "4073642932" (609) being displayed. If the user desires to clear the complete number, the CLR key must be activated and held for more than one second resulting in the display being cleared (610).

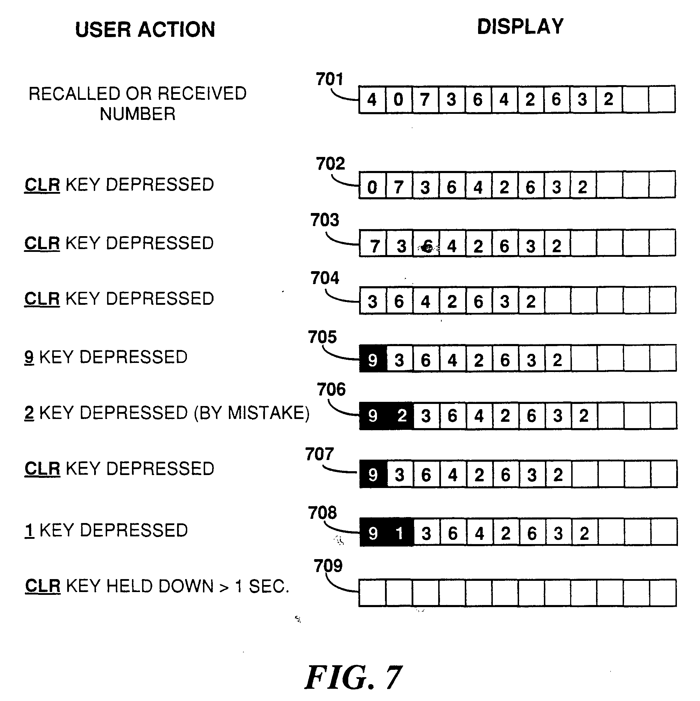

Referring to FIG. 7, the sequence (701-709) illustrates the preferred clear and digit key editing of an automatically entered telephone number. In this example, assume that the user desires to change a received or retrieved telephone number of "4073642632" to "913642632." The display (701) preferably comprises a twelve digit presentation device displaying the automatically entered telephone number "4073642632." When the user activates the CLR key (702, 703, 704), the first digit at each respective activation "4", "0", and "7", is deleted. The user the activates the "9" and "2" keys (705, 706) causing the display to insert the digits "92" in front (to the left) of the number "3462632" resulting in the number "923642632" (706). In this example, the "2" key was accidentally activated resulting in the number "923642632" (706). To correct the last entered digit, the user again activates the CLR key (707) deleting the last "2", then the "1" key prefixing a new "1" after the "9" and resulting in the number "913462632" (708) being displayed. If the user desires to clear the complete number, the CLR key must be activated and held for more than one second resulting in the display being cleared (709).

## Claims

1. A method of transmitting information representing a phone number, comprising the steps of:
displaying at least a portion of the information representing the phone number in response to a first command input by a user, the information comprising one of: a single digit entered in response to the first command input being a representation of the single digit; and a stored number retrieved from a memory in response to the first command input invoking recall of the stored number;
selecting an editing mode for modifying the phone number, the editing mode being one of: a single digit entry mode selected in response to the first command input invoking entry of the single digit, the single digit entry mode permitting the user to input digits one digit at a time; a single digit delete mode selected in response to a second command input invoking deletion of the single digit, the single digit delete mode permitting the user to erase digits one digit at a time; and a recalled number entry mode selected in response to the first command input invoking retrieval of a stored number from a memory; and
in the single digit entry mode:
editing the information representing the phone number by adding an additional digit immediately after the at least one displayed digit;
in the single digit delete mode:
editing the information representing the phone number by deleting a remaining digit or the additional digit that was last to be placed immediately after the at least one displayed digit;
in the recalled number entry mode:
editing the information representing the phone number by adding the additional digit immediately before the at least one displayed digit; and
transmitting the information as edited in response to a third command input representing a transmission request by the user.

2. A radio telephone comprising,
means for entering first information representing at least one digit of a phone number;
a memory for storing second information representing at least a portion of the phone number;
a receiver for correlating a selective call address associated with the radio telephone and upon correlating the selective call address with the radio telephone, providing a received message comprising at least a portion of the phone number;
means for displaying at least a portion of the first information representing at least one digit of the phone number in response to a first command input by a user, the information comprising one of: a single digit entered in response to the first command input being a representation of the single digit; and a stored number representing the at least a portion of the phone number retrieved from a memory in response to the first command input invoking recall of the stored number;
means for selecting at least one editing mode for modifying the first information representing the at least one digit of the phone number, the editing mode being one of: a single digit entry mode selected in response to the first command input invoking entry of the single digit, the single digit entry mode permitting the user to input digits one digit at a time; a single digit delete mode selected in response to a second command input invoking deletion of the single digit, the single digit delete mode permitting the user to erase digits one digit at a time; and a recalled number entry mode selected in response to the first command input invoking retrieval of a stored number from a memory; and
means for editing the first information representing at least one digit of the phone number in response to the at least one selected editing mode:
in the single digit entry mode operating to edit the information representing the phone number by adding an additional digit immediately after the at least one displayed digit;
in the single digit delete mode operating to edit the information representing the phone number by deleting a remaining digit or the additional digit that was last to be placed immediately after the at least one displayed digit; and
in the recalled number entry mode operating to edit the information representing the phone number by adding the additional digit immediately before the at least one displayed digit; and
means for transmitting the information as edited to initiate a telephone call in response to a third command input representing a transmission request by the user.

3. The radio telephone according to claim 2, wherein the first information comprises an access code required for access to an alternate public switched telephone network exchange.

4. The radio telephone according to claim 2, wherein the first information comprises an access code required for access to a standard public switched telephone network exchange.

5. The radio telephone according to claim 2, further comprising:
a receiver;
means for controlling the operation of the receiver and a transmitter;
means for processing the first information from the keypad;
means for reading the memory and retrieving the second information representing at least a portion the phone number in response to processing third information entered from the keypad; and
means for assembling in sequence the first and second information into the complete phone number;
an energy source for powering the radio telephone;
a speaker for presenting aural communications to a user;
a microphone for receiving audio communications from the user;
a display for providing providing feedback to the user by presenting information entered by the user; and
an alert transducer capable of providing a signal to the user indicating the operational status of the radio telephone.

## Patentansprüche

1. Verfahren zum Senden von Information, die eine Telefonnummer repräsentiert, mit den Schritten:
Anzeigen von wenigstens einem Teil der Information, die die Telefonnummer repräsentiert, als Antwort auf eine erste Befehlseingabe durch einen Anwender, wobei die Information einen der folgenden Teile aufweist: eine einzelne Ziffer, die als Antwort auf die erste Befehlseingabe eingegeben wurde, die eine Repräsentation der einzelnen Ziffer ist; und eine gespeicherte Nummer, die von einem Speicher als Antwort auf die erste Befehlseingabe wieder abgerufen wurde, wobei ein Wiederabruf der gespeicherten Nummer veranlasst wird;
Auswählen eines Editiermodus zum Modifizieren der Telefonnummer, wobei der Editiermodus einer der folgenden ist: ein Einzelziffer-Eingabemodus, der als Antwort auf die erste Befehlseingabe ausgewählt wird, die die Eingabe der einzelnen Ziffer veranlasst, wobei der Einzelziffer-Eingabemodus dem Anwender gestattet, eine Ziffer nach der anderen einzugeben; ein Einzelziffer-Löschmodus, der als Antwort auf eine zweite Befehlseingabe ausgewählt wird, die das Löschen der einzelnen Ziffer veranlasst, wobei der Einzelziffer-Löschmodus dem Anwender gestattet eine Ziffer nach der anderen Ziffer zu löschen; und einen Eingabemodus für eine wieder abgerufene Nummer, der als Antwort auf die erste Befehlseingabe ausgewählt wurde, die das Wiedergewinnen einer gespeicherten Nummer von einem Speicher veranlasst; und
in dem Einzelziffer-Eingabemodus:
Editieren der Information, die die Telefonnummer repräsentiert, indem eine zusätzliche Ziffer unmittelbar nach der letzten angezeigten Ziffer zugefügt wird;
in dem Einzelziffer-Löschmodus:
Editieren der Information, die die Telefonnummer repräsentiert, indem eine verbleibende Ziffer oder die zusätzliche Ziffer gelöscht wird, die als letzte unmittelbar nach der wenigstens einen angezeigten Ziffer zu platzieren war;
in dem Eingabemodus für eine wieder abgerufene Nummer:
Editieren der Information, die die Telefonnummer repräsentiert, indem die zusätzliche Ziffer unmittelbar vor der wenigstens einen angezeigten Ziffer zugefügt wird; und
Senden der editierten Information als Antwort auf eine dritte Befehlseingabe, die eine Sendeanfrage durch den Anwender repräsentiert.

2. Funktelefon mit:
Mitteln zum Eingeben einer ersten Information, die wenigstens eine Ziffer einer Telefonnummer repräsentiert;
einem Speicher zum Speichern einer zweiten Information, die wenigstens einen Teil der Telefonnummer repräsentiert;
einem Empfänger zum Korrelieren einer selektiven Anrufadresse, die mit dem Funktelefon assoziiert ist, und nach dem Korrelieren der selektiven Anrufadresse mit dem Funktelefon, zum Bereitstellen einer empfangenen Nachricht mit wenigstens einem Teil der Telefonnummer;
Mitteln zum Anzeigen von wenigstens einem Teil der ersten Information, die wenigstens eine Ziffer der Telefonnummer repräsentiert, als Antwort auf eine erste Befehlseingabe durch einen Anwender, wobei die Information einen der folgenden Teile aufweist: eine einzelne Ziffer, die als Antwort auf die erste Befehlseingabe eingegeben wurde, die eine Repräsentation der einzelnen Ziffer ist; und eine gespeicherte Nummer, die wenigstens einen Teil der Telefonnummer repräsentiert, die von einem Speicher als Antwort auf die erste Befehlseingabe wieder abgerufen wurde, wobei ein Wiederabruf der gespeicherten Nummer veranlasst wird;
Mitteln zum Auswählen wenigstens eines Editiermodus zum Modifizieren der ersten Information, die wenigstens eine Ziffer der Telefonnummer repräsentiert, wobei der Editiermodus einer der folgenden ist: ein Einzelziffer-Eingabemodus, der als Antwort auf die erste Befehlseingabe ausgewählt wird, die die Eingabe der einzelnen Ziffer veranlasst, wobei der Einzelziffer-Eingabemodus dem Anwender gestattet, eine Ziffer nach der anderen einzugeben; ein Einzelziffer-Löschmodus, der als Antwort auf eine zweite Befehlseingabe ausgewählt wird, die das Löschen der einzelnen Ziffer veranlasst, wobei der Einzelziffer-Löschmodus dem Anwender gestattet, eine Ziffer nach der anderen Ziffer zu löschen; und ein Eingabemodus für eine wieder abgerufene Nummer, der als Antwort auf die erste Befehlseingabe ausgewählt wurde, die das Wiedergewinnen einer gespeicherten Nummer von einem Speicher veranlasst; und
Mitteln zum Editieren der ersten Information, die wenigstens eine Ziffer der Telefonnummer repräsentiert, als Antwort auf den wenigstens einen ausgewählten Editiermodus:
in dem Einzelziffer-Eingabemodus ein Betrieb zum Editieren der Information, die die Telefonnummer repräsentiert, indem eine zusätzliche Ziffer unmittelbar nach der letzten angezeigten Ziffer zugefügt wird;
in dem Einzelziffer-Löschmodus ein Betrieb, zum Editieren der Information, die die Telefonnummer repräsentiert, indem eine verbleibende Ziffer oder die zusätzliche Ziffer gelöscht wird, die zuletzt unmittelbar nach der wenigstens einen angezeigten Ziffer zu platzieren war; und
in dem Eingabemodus für eine wieder abgerufene Nummer, ein Betrieb zum Editieren der Information, die die Telefonnummer repräsentiert, indem die zusätzliche Ziffer vor der wenigstens einen angezeigten Ziffer zugefügt wird; und
Mitteln zum Senden der editierten Information, um einen Telefonanruf zu initiieren, als Antwort auf eine dritte Befehlseingabe, die eine Sendeanfrage durch den Anwender repräsentiert.

3. Funktelefon nach Anspruch 2, bei dem die erste Information einen Zugangscode umfasst, der für einen Zugang zum Austausch mit einem anderen öffentlichen, leitungsvermittelnden Telefonnetz erforderlich ist.

4. Funktelefon nach Anspruch 2, bei dem die erste Information einen Zugangscode umfasst, der für einen Zugang zum Austausch mit einem standardmäßigen öffentlichen, leitungsvermittelnden Telefonnetz erforderlich ist.

5. Funktelefon nach Anspruch 2, welches weiterhin umfasst:
einen Empfänger;
Mittel zum Steuern des Betriebs des Empfängers und eines Senders;
Mittel zum Verarbeiten der ersten Information von der Tastenfläche;
Mittel zum Lesen des Speichers und zum Wiedergewinnen der zweiten Information, die wenigstens einen Teil der Telefonnummer repräsentiert, als Antwort auf das Verarbeiten einer dritten Information, die über die Tastenfläche eingegeben wurde; und
Mittel um die erste und die zweite Information aufeinanderfolgend zu der vollständigen Telefonnummer zusammenzusetzen;
eine Energiequelle, um das Funktelefon mit Energie zu versorgen;
einen Lautsprecher zum Präsentieren einer hörbaren Kommunikation für einen Anwender;
ein Mikrofon zum Empfangen von Audiokommunikationen von dem Anwender;
eine Anzeige zum Bereitstellen einer Rückkopplung für den Anwender, indem Information präsentiert wird, die von dem Anwender eingegeben wird; und
einen Alarm-Transducer, der in der Lage ist, dem Anwender ein Signal zur Verfügung zu stellen, welches den Operationszustand des Funktelefons anzeigt.

## Revendications

1. Procédé de transmission des informations représentant un numéro de téléphone comprenant les étapes suivantes :
affichage d'au moins une partie des informations représentant le numéro de téléphone en réponse à une première commande entrée par l'utilisateur, les informations comprenant : soit un chiffre unique entré en réponse à la première entrée de commande représentant le chiffre unique ; soit un numéro mémorisé récupéré depuis une mémoire en réponse à la première entrée de commande demandant le rappel du numéro mémorisé ;
sélection d'un mode de modification pour modifier le numéro de téléphone, le mode de modification étant l'un des suivants : un mode d'entrée d'un chiffre unique sélectionné en réponse à la première entrée de commande demandant l'entrée d'un chiffre unique, le mode d'entrée d'un chiffre unique permettant à l'utilisateur d'entrer des chiffres un par un ; un mode de suppression d'un chiffre unique sélectionné en réponse à une deuxième entrée de commande demandant la suppression du chiffre unique, le mode de suppression d'un chiffre unique permettant à l'utilisateur d'effacer des chiffres un par un ; un mode d'entrée de numéro rappelé sélectionné en réponse à la première entrée de commande demandant la récupération d'un numéro mémorisé dans une mémoire ;
et en mode d'entrée d'un chiffre unique :
modification des informations représentant le numéro de téléphone en ajoutant un chiffre supplémentaire juste après le ou les chiffres affichés ;
en mode de suppression d'un chiffre unique :
modification des informations représentant le numéro de téléphone en supprimant un chiffre restant ou le chiffre supplémentaire qui a été placé en dernier juste après le ou les chiffres affichés ;
en mode d'entrée de numéro rappelé :
modification des informations représentant le numéro de téléphone en ajoutant le chiffre supplémentaire juste avant le ou les chiffres affichés ; et
transmission des informations modifiées en réponse à une troisième commande représentant une demande de transmission émise par l'utilisateur.

2. Radiotéléphone comprenant :
un moyen d'entrée des premières informations représentant au moins un chiffre d'un numéro de téléphone ;
une mémoire de stockage des deuxièmes informations représentant au moins une partie du numéro de téléphone ;
un récepteur de corrélation d'une adresse d'appel sélectif associée au radiotéléphone et, lors de la corrélation, l'adresse d'appel sélectif avec le radiotéléphone, fournissant un message reçu comprenant au moins une partie du numéro de téléphone ;
un moyen d'affichage d'au moins une partie des premières informations représentant au moins un chiffre d'un numéro de téléphone en réponse à une première commande entrée par l'utilisateur, les informations comprenant : soit un chiffre unique entré en réponse à la première entrée de commande représentant le chiffre unique ; soit un numéro mémorisé représentant au moins la partie du numéro de téléphone récupérée depuis une mémoire en réponse à la première entrée de commande demandant le rappel du numéro mémorisé ;
un moyen de sélection d'au moins un mode de modification pour modifier les premières informations représentant au moins un chiffre d'un numéro de téléphone, le mode de modification étant l'un des suivants : un mode d'entrée d'un chiffre unique sélectionné en réponse à la première entrée de commande demandant l'entrée d'un chiffre unique, le mode d'entrée d'un chiffre unique permettant à l'utilisateur d'entrer des chiffres un par un ; un mode de suppression d'un chiffre unique sélectionné en réponse à une deuxième entrée de commande demandant la suppression du chiffre unique, le mode de suppression d'un chiffre unique permettant à l'utilisateur d'effacer des chiffres un par un ; un mode d'entrée de numéro rappelé sélectionné en réponse à la première entrée de commande demandant la récupération d'un numéro mémorisé dans une mémoire ; et
un moyen de modification des premières informations représentant au moins un chiffre du numéro de téléphone en réponse à au moins un mode de modification sélectionné :
en mode d'entrée d'un chiffre unique, modification des informations représentant le numéro de téléphone en ajoutant un chiffre supplémentaire juste après le ou les chiffres affichés ;
en mode de suppression d'un chiffre unique, modification des informations représentant le numéro de téléphone en supprimant un chiffre restant ou le chiffre supplémentaire qui a été placé en dernier juste après le ou les chiffres affichés ; et
en mode d'entrée de numéro rappelé, modification des informations représentant le numéro de téléphone en ajoutant le chiffre supplémentaire juste avant le ou les chiffres affichés ; et
un moyen de transmission des informations modifiées pour émettre un appel téléphonique en réponse à une troisième commande représentant une demande de transmission émise par l'utilisateur.

3. Radiotéléphone selon la revendication 2, dans lequel les premières informations comprennent un code d'accès nécessaire pour accéder à un central d'un réseau téléphonique commuté public particulier.

4. Radiotéléphone selon la revendication 2, dans lequel les premières informations comprennent un code d'accès nécessaire pour accéder à un central d'un réseau téléphonique commuté public standard.

5. Radiotéléphone selon la revendication 2, comprenant en outre :
un récepteur ;
un moyen de commande du fonctionnement du récepteur et d'un émetteur ;
un moyen de traitement des premières informations à partir du clavier ;
un moyen de lecture de la mémoire et récupérer les deuxièmes informations représentant au moins une partie du numéro de téléphone en réponse au traitement des troisièmes informations entrées à partir du clavier ; et
un moyen de mise en ordre les premières et les deuxièmes informations afin de former un numéro de téléphone complet ;
une source d'énergie pour alimenter le radiotéléphone ;
un haut-parleur pour présenter les communications vocales à l'utilisateur ;
un microphone pour recevoir des communications vocales provenant de l'utilisateur ;
un affichage pour fournir un retour à l'utilisateur en lui présentant les informations qu'il a entrées ; et
un transducteur d'alarme capable de fournir un signal à l'utilisateur indiquant l'état opérationnel du radiotéléphone.
